(19) Europäisches Patentamt
European Patent Office
Office européen des brevets

(11) Veröffentlichungsnummer : **0 018 939**
**B1**

(12) # EUROPÄISCHE PATENTSCHRIFT

(45) Veröffentlichungstag der Patentschrift : **05.10.83**

(51) Int. Cl.³ : **C 09 B 55/00**, C 09 B 56/02, C 09 B 45/00, D 06 P 1/13, D 06 P 3/30, D 06 P 3/32

(21) Anmeldenummer : **80810097.8**

(22) Anmeldetag : **24.03.80**

(54) **1 : 2-Metallkomplexfarbstoffe von Azomethinen, Verfahren zu ihrer Herstellung und Verfahren zum Färben und Bedrucken unter Verwendung dieser Farbstoffe.**

(30) Priorität : **28.03.79 CH 2877/79**
**03.03.80 CH 1663/80**

(43) Veröffentlichungstag der Anmeldung : **12.11.80 Patentblatt 80/23**

(45) Bekanntmachung des Hinweises auf die Patenterteilung : **05.10.83 Patentblatt 83/40**

(84) Benannte Vertragsstaaten :
**BE CH DE FR GB IT**

(56) Entgegenhaltungen :
**FR A 2 346 416**
**FR A 2 348 953**
**GB A 1 413 514**

(73) Patentinhaber : **CIBA-GEIGY AG**
**Patentabteilung Postfach**
**CH-4002 Basel (CH)**

(72) Erfinder : **Püntener, Alois, Dr.**
**Im Hard 5**
**CH-4310 Rheinfelden (CH)**
Erfinder : **Beffa, Fabio, Dr.**
**Burgstrasse 38**
**D-4125 Riehen (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

1 : 2-Metalkomplexfarbstoffe von Azomethinen, Verfahren zu ihrer Herstellung und Verfahren zum Färben und Bedrucken unter Verwendung dieser Farbstoffe

Die vorliegende Erfindung betrifft neue 1 : 2-Metallkomplexfarbstoffe, die an ein Schwermetallatom 2 gleiche oder verschiedene Azomethine der Formel

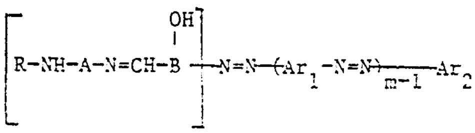

(1)

gebunden enthalten, worin R Wasserstoff, gegebenenfalls substituiertes Alkyl, Aralkyl, Aryl, Alkylsulfonyl oder Arylsulfonyl, A der Rest eines aromatischen oder heterocyclischen Diamins, dessen Aminogruppen in 1,2-Stellung zueinander stehen, B der Rest eines aromatischen o-Hydroxyaldehyds, $Ar_1$ ein aromatischer Rest, m1 oder 2 und $Ar_2$ ein aromatischcarbocyclischer oder heterocyclischer Rest ist.

Aus den französischen Patentschriften 2.348.953 und 2.346.416 sind bereits 1 : 2-Chromkomplexfarbstoffe bekannt, die jeweils einen Azomethinfarbstoff enthalten, der aus einem aliphatischen Diamin gebildet wurde, im Gegensatz zu den Azomethinen der vorliegenden Erfindung, die aus einem aromatischen oder heterocyclischen Diamin gebildet wurden.

Daneben weisen die Farbstoffe dieser Patentschriften aber noch weitere gravierende Unterschiede zu den erfindungsgemässen Farbstoffen auf. Die 1 : 2-Komplexe der FR-A-2.348.953 enthalten als zweiten Azomethinfarbstoff einen solchen, der im Aminteil über eine Hydroxy- oder Carboxygruppe an Chrom gebunden ist, während bei den erfindungsgemässen Farbstoffen die Bindung über eine Aminogruppe erfolgt.

Die 1 : 2-Komplexe der FR-A-2.346.416 enthalten neben dem Azomethinfarbstoff einen Azofarbstoff und nicht zwei Azomethinfarbstoffe, wie die erfindungsgemässen Farbstoffe.

Geeignete Schwermetalle für die Metallkomplexfarbstoffe der vorliegenden Erfindung sind Eisen, sowie Chrom und Kobalt.

Insbesondere betrifft sie 1 : 2-Metallkomplexe, worin 2 Moleküle der Formel (1), an ein Chrom- oder Kobaltatom gebunden sind und worin R dasselbe wie in Formel (1), A einen gegebenenfalls substituierten Arylenrest und B den Rest eines o-Hydroxybenzaldehyds bedeutet.

Als Alkylreste sind vor allem niedrigmolekulare Reste gemeint. Als Substituenten dieser Reste kommen z. B. die Hydroxyl- und die Cyangruppe in Betracht. So kann R beispielsweise auch die β-Hydroxyäthyl-oder β-Cyanäthylgruppe bedeuten. Mit « niedrigmolekular » werden hier und auch später Gruppen mit 1 bis 6, vorzugsweise 1 bis 2 Kohlenstoffatomen bezeichnet. Der Ausdruck « Aryl » bzw. « Arylen » bedeutet insbesondere Phenyl bzw. Phenylen und mit Cyan, Halogen, Nitro, Sulfo, Carboxy, Sulfamoyl, N-mono- oder N,N-dialkyliertem Sulfamoyl, Alkylsulfonyl, der Phosphonsäuregruppe, niedrigmolekularem Alkyl oder Alkoxy oder Acylamino substituiertes Phenyl, bzw. Phenylen. Mit « Aralkyl » ist vor allem die Benzylgruppe gemeint.

Der Begriff « Acylamino » bezeichnet hierin vor allem Aroylamino, insbesondere Benzoylamino, Alkoxycarbonylamino mit jeweils 1 bis 4 C-Atomen, insbesondere Acetylamino oder Methoxy- oder Aethoxycarbonylamino, sowie Ureido.

Geeignete Diamine, von denen sich der Rest A ableitet, sind z. B. : 1,2-Diaminobenzoyl, 1,2-Diamino-4-nitrobenzol, 1,2-Diaminobenzol-4-carbonsäure, 1,2-Diaminobenzol-4-sulfonsäure, 1,2-Diaminobenzol-4-phosphonsäure, 1,2-Diamino-4-methylbenzol, 1,2-Diamino-4-chlorbenzol, 1,2-Diamino-4-sulfamoylbenzol, 1-Amino-2-methylaminobenzol, 1-Amino-2-(4′-chlorphenylamino)-benzol, 1-Amino-2-äthylaminobenzol, 1-Amino-2-methylamino-5-methylsulfonylbenzol, 1-Amino-2-butylamino-5-methyl-sulfonylbenzol, 1-Amino-2-(tosylamino)-benzol, 1-Amino-2-methylsulfonyl-aminobenzol, 1-Amino-2-(2′,4′-dinitrophenylamino)-benzol, 1-Amino-2-(2′-nitro-4′-sulfophenylamino)-benzol, 1-Amino-2-(2′-nitro-4′-methyl-sulfonylphenylamino)-benzol, 1,2-Diaminonaphthalin, 2,3-Diamino-5,6-dicyanopyrazin sowie 1,2-Diamino-4,5-dichlorbenzol.

Geeignete o-Hydroxyaldehyde sind beispielsweise : 2-Hydroxybenzaldehyd, 5-Methyl-2-hydroxybenzaldehyd, 3,5-Dimethyl-2-hydroxybenzaldehyd, 5-Butyl-2-hydroxybenzaldehyd, 3,5-Dichlor-2-hydroxybenzaldehyd, 3-Chlor-5-methyl-2-hydroxybenzaldehyd, 3-Methyl-5-chlor-2-hydroxybenzaldehyd, sowie vor allem in 5-Stellung mit einer Arylazo- oder Arylazo-arylenazogruppe substituierte 2-Hydroxybenzaldehyde.

Die neuen Metallkomplexe werden erhalten, indem man ein Azomethin der Formel (1) oder ein Gemisch aus einem Amin der Formel

$$R—NH—A—NH_2 \quad (4)$$

und einem Aldehyd der Formel

$$OHC—B—OH \quad (5)$$

wobei entweder das Amin der Formel (4) oder der Aldehyd der Formel (5) die Gruppe $—N=N—(Ar_1—N=N)_{m-1}Ar_2$ enthält, mit einem Metall abgebenden Mittel im Verhältnis 2 : 1 umsetzt, Das Metall abgebende Mittel ist ein Eisen, bevorzugt aber ein Chrom oder Kobalt abgebendes Mittel z. B. ein Salz des zweiwertigen Kobalts oder des dreiwertigen Chroms, wie Kobaltsulfat, Chromchlorid, Kobalt- oder Chromacetat oder eine Komplexsalz wie der Chromsalicylatkomplex. Die oben erwähnten einfachen Salze können auch in Gegenwart von Komplexbildnern, wie z. B. Weinsäure oder Milchsäure verwendet werden.

Von besonderem Interesse sind die Chrom- oder Kobaltkomplexe, die 2 Azomethinmoleküle der Formel

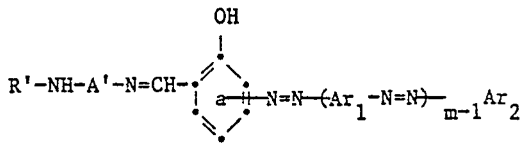

(2)

an ein Chrom- oder Kobaltatom gebunden enthalten, worin R′ Wasserstoff, niedrigmolekulares, gegebenenfalls substituiertes Alkyl oder gegebenenfalls substituiertes Phenyl, A′ gegebenenfalls substituiertes Phenylen, $Ar_1$ ein gegebenenfalls substituierter Phenylen- oder Naphthylenrest, m 1 oder 2 und $Ar_2$ ein Benzol- oder Naphthalinrest oder ein heterocyclischer Rest ist.

Der Rest $Ar_2$ kann die bei Diazokomponenten üblichen Substituenten tragen. Wenn $Ar_2$ ein heterocyclischer Rest ist, so handelt es sich z. B. um einen Thiazolyl-, Benzthiazolyl-, Imidazolyl-, Chinolinyl-, Oxazolyl- oder Benzoxazolylrest.

Vorzugsweise ist $Ar_2$ jedoch ein gegebenenfalls mit Chlor, Brom, Nitro, Arylamino, Sulfo, Sulfamoyl, N-mono oder N,N-dialkyliertem Sulfamoyl, Alkylsulfonyl, Alkyl oder Alkoxy substituierter Phenyl- oder ein gegebenenfalls mit Sulfo substituierter Naphthylrest. $Ar_1$ ist bevorzugt ein Phenylen- oder Naphthylenrest, wobei als Substituenten hauptsächlich die Sulfogruppe sowie — im Fall des Phenylenrestes — niedrigmolekulare Alkyl- und Alkoxyreste in Frage kommen, wie z. B. Methyl, Aethyl und Methoxy. Der Rest R′ ist bevorzugt Wasserstoff oder gegebenenfalls mit Chlor, Sulfo, Methylsulfonyl oder Nitro substituiertes Phenyl.

Als Rest A′ kommt vor allem der Phenylenrest oder ein mit einem oder zwei der folgenden Substituenten substituierter Phenylenrest in Betracht : Sulfo, Sulfamoyl, Carboxy, N-mono- oder N,N-dialkyliertes Sulfamoyl, Alkylsulfonyl, Chlor, Brom, Nitro, Alkyl und Alkoxy.

Die Arylazo- bzw. Arylazoarylenazogruppe ist in o- oder vorzugsweise in p-Stellung zur Hydroxylgruppe an den Benzolring a gebunden und bei den Alkyl- und Alkoxyresten sind insbesondere niedrigmolekulare Gruppen gemeint.

Eine bevorzugte Gruppe der erfindungsgemässen Verbindungen sind die 1 : 2-Chrom- oder 1 : 2-Kobaltkomplexe der Azomethinverbindungen der Formel

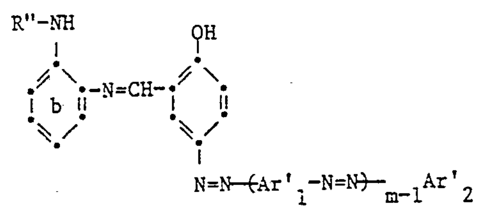

(3)

worin R″ Wasserstoff oder gegebenenfalls mit Chlor, Sulfo, Methylsulfonyl oder Nitro substituiertes Phenyl ist, $Ar'_1$ einen gegebenenfalls mit Sulfo, Alkyl oder Alkoxy substituierten Phenylen- oder einen gegebenenfalls mit Sulfo substituierten Naphthylenrest und $Ar_2'$ einen gegebenenfalls mit Chlor, Brom, Nitro, Acylamino, Sulfo, Sulfamoyl, N-mono- oder N,N-dialkyliertem Sulfamoyl, Alkylsulfonyl, Alkyl oder Alkoxy substituierten Phenyl- oder einen gegenbenenfalls mit Sulfo substituierten Naphthylrest bedeutet und worin der Benzolring b unsubstituiert ist oder einen der folgenden Substituenten trägt : Sulfo, Sulfamoyl, N-mono- oder N,N-dialkyliertes Sulfamoyl, Alkylsulfonyl, Chlor, Brom, Nitro, Alkyl und Alkoxy sowie Carboxy und m 1 oder 2 ist und worin die Symbole R″, $Ar_1'$, $Ar_2'$ oder der Ring b zusammen mindestens eine wasserlöslichmachende Gruppe enthalten.

Die Einführung einer Arylazo- oder Arylazoarylenazogruppe in die oben erwähnten o-Hydroxyaldehyde geschieht in üblicher Weise, indem man eine Verbindung der Formel

$$Ar_2—N=—Ar_1—N_2^{\oplus}X^{\ominus} \qquad (6)$$

oder

$$Ar_2—N_2^{\oplus}X^{\ominus} \qquad (7)$$

worin $X^{\ominus}$ ein Anion bedeutet, mit einem o-Hydroxyaldehyd kuppelt. Diese Verbindungen leiten sich bevorzugt von Naphthylaminen und insbesondere von Anilinen her, wie z. B. 1-Naphthylamin, 4,8-Disulfo-2-naphthylamin, 6,8-Disulfo-2-naphthylamin, 1-Naphthylamin-3-, -4-, -5-, -6-, -7- oder 8-sulfosäure, m-Aminobenzol-sulfamid, Anilin, 2-, 3- oder 4-Sulfoanilin, 2-, 3- oder 4-Nitranilin, 2-, 3- oder 4-Methylanilin, 2-, 3- oder 4-Methoxyanilin, 2-, 3-, oder 4-Chloranilin, 2,5-Dichlor-4-sulfoanilin, 2-Chlor-5-sulfoanilin, 4-Nitro-2-sulfoanilin, 4-Methoxy- oder 4-Methyl-3-sulfoanilin, 2-Nitro-4-sulfoanilin, 2,4- oder 2,5-Disulfoanilin, 3- oder 4-Aminoacetanilid, 3- oder 4-Amino-6-sulfoacetanilid, 3- oder 4-Carbomethoxyaminoanilin oder 3-Ureidoanilin.

Eine bevorzugte Gruppe von erfindungsgemässen Farbstoffen sind die Chrom- oder Kobaltkomplexe, welche pro Metallatom zwei Azomethinverbindungen der Formel

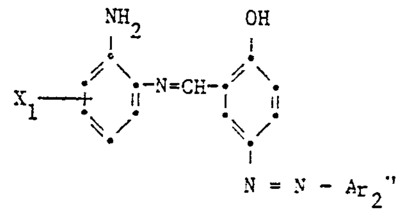

(4)

gebunden enthalten, worin $X_1$ Wasserstoff, Sulfo, niedrigmolekulares Alkyl, Chlor oder Nitro und $Ar_2''$ ein Phenyl oder Naphthylrest ist, der eine oder zwei Sulfogruppen trägt und gegebenenfalls noch mit niedrigmolekularem Alkyl, Alkoxy, Acylamino, Nitro oder Chlor substituiert ist.

Die Herstellung der neuen Farbstoffe erfolgt durch Metallisierung nach üblichen, an sich bekannten Methoden. Die Umsetzung kann in organischen Lösungsmitteln, z. B. Alkoholen oder in wässriger Lösung oder in wässrig-organischem Medium durchgeführt werden, gegebenenfalls auch auf dem Substrat, insbesondere auf Wolle, selbst. Die Azomethinverbindungen der Formel (1), bzw. die Gemische aus den Aminen der Formel (4) und den Aldehyden der Formel (5) werden zweckmässig in neutralem bis schwach alkalischem Medium mit den metallabgebenden Mitteln umgesetzt. Man arbeitet je nach Metall bei Raumtemperatur oder bei erhöhten Temperaturen, vorzugsweise zwischen 50 und 120 °C. Das metallabgebende Mittel wird in stöchiometrischer Menge oder im Ueberschuss eingesetzt. Es können entweder Gemische von Azomethinen der Formel (1) oder ein einheitliches Azomethin der Formel (1) metallisiert werden. Im ersten Fall erhält man ein Gemisch der symmetrischen und asymmetrischen Metallkomplexe der eingesetzten Azomethinverbindungen. Gewünschtenfalls können auch Gemische von metallabgebenden Mitteln eingesetzt werden.

Die neuen Metallkomplexe werden vorteilhaft in Form ihrer Salze, insbesondere Alkali-, vor allem Lithium-, Natrium-, Kalium- oder Ammoniumsalze oder als Salze organischer Amine isoliert. Sie eignen sich je nach Konstitution zum Färben und Bedrucken von Materialien der verschiedensten Art und nach den verschiedensten Methoden, vor allem zum Färben von Materialien aus natürlichen oder synthetischen Polyamiden, wie Wolle und Seide, synthetische Polyamid- und Polyurethanfasern, Haare, und insbesondere zum Färben von Leder und Pelzen. Sie können auch zum Bedrucken der genannten Materialien dienen. Ausserdem können sie zum Färben von Lacken oder Spinnmassen sowie von Leder nach dem Aufspritzverfahren verwendet werden.

Die neuen Farbstoffe zeichnen sich vor allem durch ihre hohen Echtheiten, insbesondere die gute Lichtechtheit aus. Sie haben ein gutes Deckvermögen und geben egale Färbungen mit gleichzeitig guten Wasch-, Wasser-, Schweiss-, Alkali-, Säure-, Diffusions- und Reibechtheiten. Man erhält kräftige, gelbe, gelbbraune, rotbraune, dunkelbraune oder olivbraune Nuancen.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

## Beispiel 1

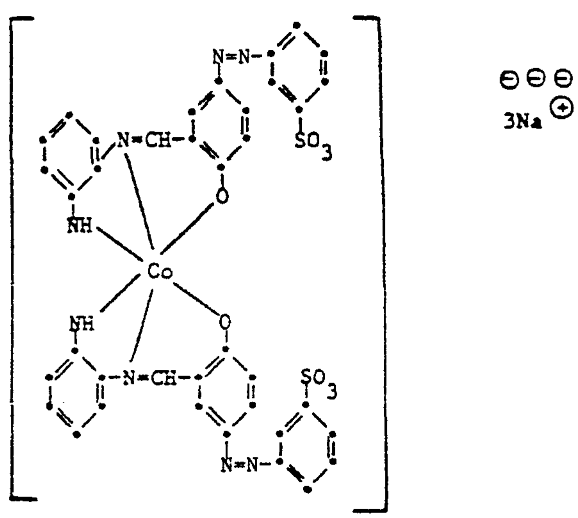

10.8 Teile 1,2-Diaminobenzol und 30.6 Teile des Monoazofarbstoffes, der erhalten wird aus diazotierter 1-Amino-benzol-3-sulfonsäure und Salicylaldehyd, werden in 250 Volumenteilen Wasser eingetragen und mit einer Lösung von chromsalicylsaurem Natrium, die 2.8 Teile Chrom enthält, versetzt. Das Reaktionsgemisch wird mit 2 N Natronlauge auf pH 8 gestellt und unter Rückfluss gekocht. Nach Beendigung der Metallisierung wird das Wasser durch Eindampfen bzw. Sprühtrocknung entfernt. Man erhält ein dunkles Pulver, das auf Leder gefärbt einen Gelbton mit hohen Echtheiten ergibt.

Beispiel 2

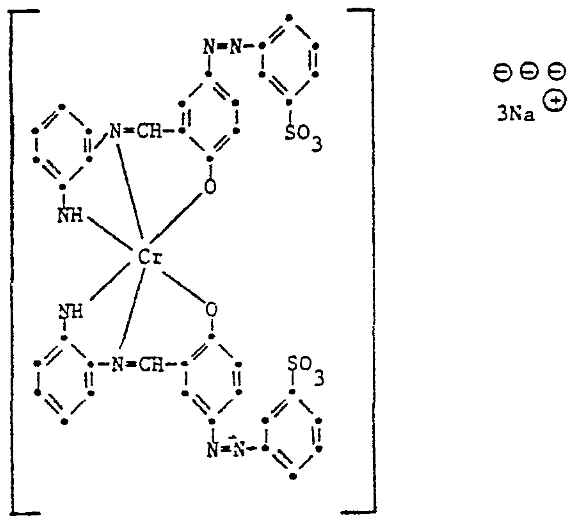

10.8 Teile 1,2-Diaminobenzol und 30.6 Teile des Monoazofarbstoffs, der erhalten wird aus diazotierter 1-Aminobenzol-3-Sulfonsäure und Salicylaldehyd, werden in 250 Volumenteile Wasser eingetragen und mit 16.9 Teilen Kobaltsulfatheptahydrat (entsprechend 3.54 Teilen Kobalt) versetzt. Man erhitzt das Reaktionsgemisch auf 80° und hält es mit 2 N Natronlauge bei pH 8-9. Nach Beendigung der Metallisierung wird der kobalthaltige Farbstoff durch Zugabe von Natrium- chlorid ausgefällt, abfiltriert und getrocknet. Das erhaltene dunkle Pulver färbt Leder in einem mittelbraunen Ton mit hohen Echtheiten.

Beispiel 3

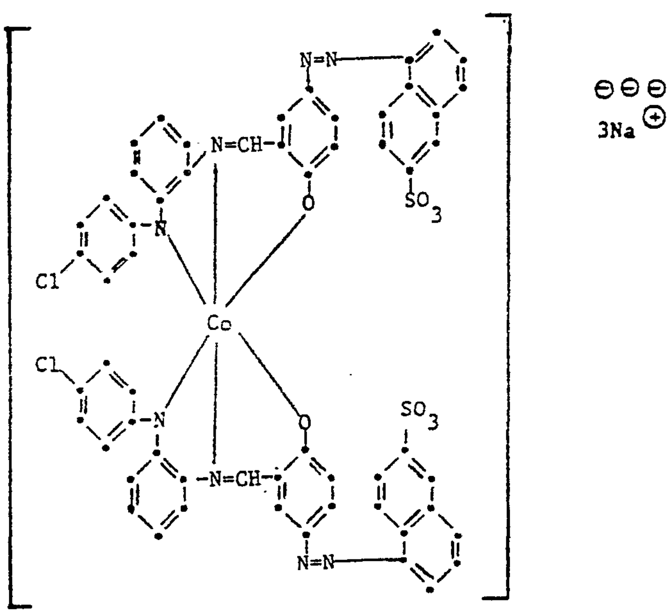

21.9 Teile 4'-Chlor-2-amino-diphenylamin und 35.6 Teile Monoazofarbstoff aus diazotierter 1-Aminonaphthalin-6-sulfonsäure und Salicylaldehyd werden in 250 Volumenteilen Aethylenglykol suspendiert und mit 16.9 Teilen Kobaltsulfatheptahydrat (entsprechend 3.54 Teilen Kobalt) versetzt. Man erhitzt das Reaktionsgemisch auf 85-90° und erhöht gleichzeitig den pH-Wert der Suspension auf 8-9 durch Zugabe von 5 N Natronlauge und hält es bei dieser Temperatur und konstantem pH-Wert durch Zugabe von 5 N

Natronlauge, bis die Metallisierung beendet ist. Der neue, kobalthaltige Farbstoff wird durch Zugabe von Natriumchloridlösung ausgefällt. Hierauf wird er abfiltriert und getrocknet. Nach dem Trocknen stellt er ein dunkles Pulver dar, das sich in Wasser mit brauner Farbe löst und Leder in echten mittelbraunen Tönen färbt.

In analoger Weise erhält man weitere Farbstoffe mit ähnlichen Eigenschaften, wenn man ein Gemisch der in Kolonne I und II angegebenen Verbindungen mit den die in Kolonne III angegebenen Metalle abgebenden Verbindungen umsetzt. Diese färben Leder in den in Kolonne IV angegebenen Nuancen.

(Siehe Tabelle Seite 7 ff.)

Tabelle

| No. | I | II | III | IV |
|---|---|---|---|---|
| 1 | 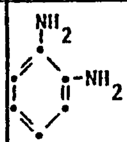 | 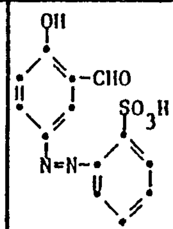 | Cr | braungelb |
| 2 | do | do | Co | mittelbraun |
| 3 | do | 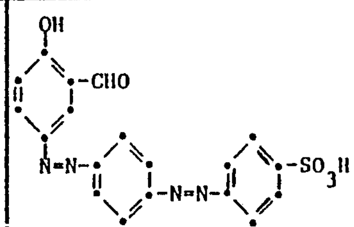 | Cr | orangebraun |
| 4 | do | do | Co | orangebraun |

| No. | I | II | III | IV |
|---|---|---|---|---|
| 5 | 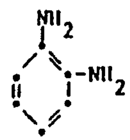 | 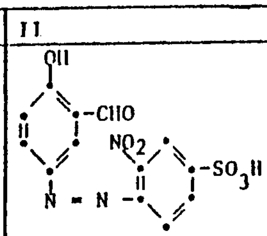 | Cr | braungelb |
| 6 | do | do | Co | braun |
| 7 | do | 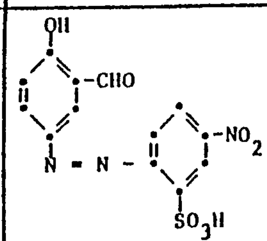 | Co | dunkelbraun |
| 8 | do | do | Cr | dunkelbraun |

| No. | I | II | III | IV |
|---|---|---|---|---|
| 9 | 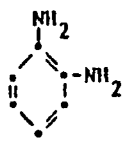 | 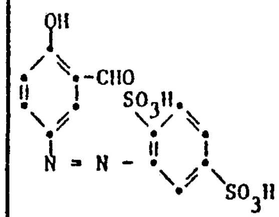 | Co | mittelbraun |
| 10 | do | 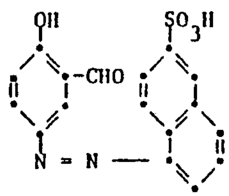 | Co | braun |
| 11 | do | do | Cr | mittelbraun |

| No. | I | II | III | IV |
|---|---|---|---|---|
| 12 | 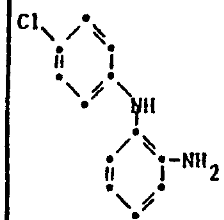 | 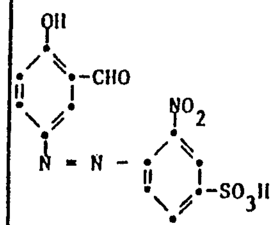 | Co | braun |
| 13 | 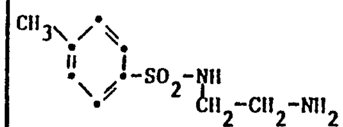 | 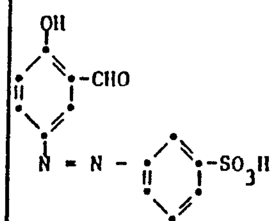 | Co | gelbbraun |
| 14 | 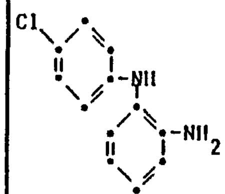 | 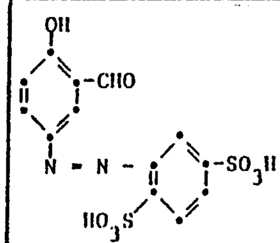 | Co | braun |

| No. | I | II | III | IV |
| --- | --- | --- | --- | --- |
| 15 | 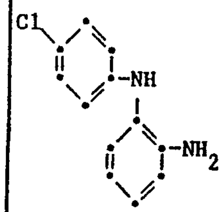 | 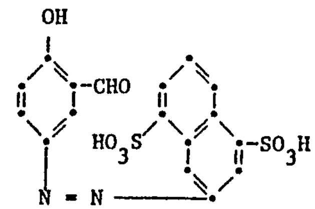 | Co | braun |
| 16 | do | 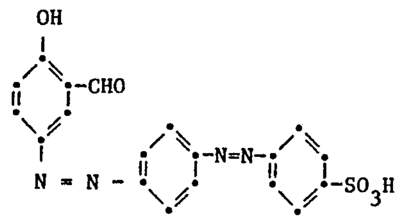 | Co | rotbraun |
| 17 | 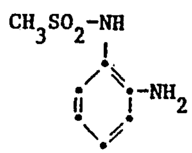 | 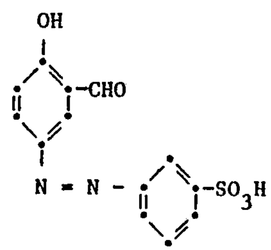 | Co | braun |

| No. | I | II | III | IV |
|---|---|---|---|---|
| 18 | 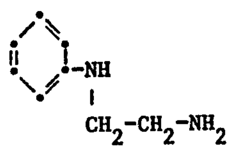 | 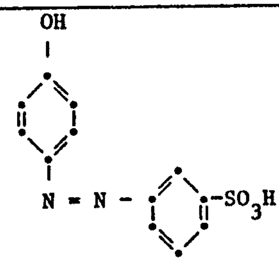 | Co | mittelbraun |
| 19 | 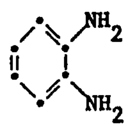 | 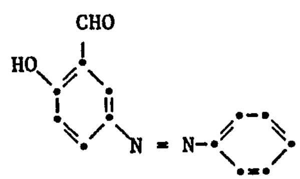 | Cr | gelbbraun |

| No. | I | II | III | IV |
|---|---|---|---|---|
| 20 | 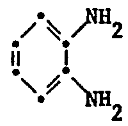 | 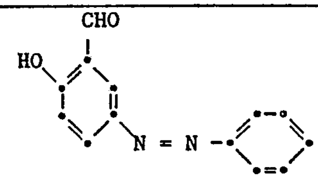 | Co | braun |
| 21 | do | 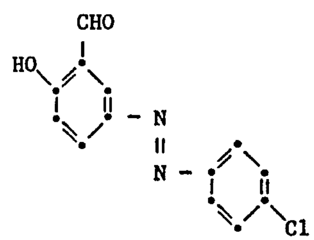 | Co | braun |
| 22 | do | 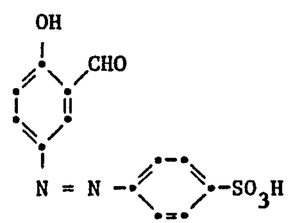 | Co | mittelbraun |
| 23 | do | do | Cr | gelb |

| No. | I | II | III | IV |
|---|---|---|---|---|
| 24 | 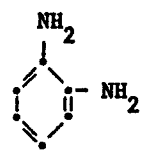 | 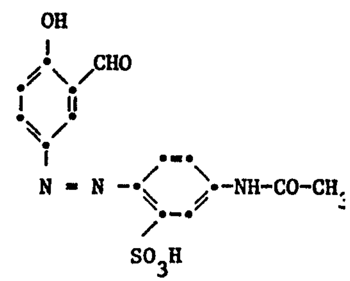 | Cr | gelb |
| 25 | do | do | Co | mittelbraun |
| 26 | do | 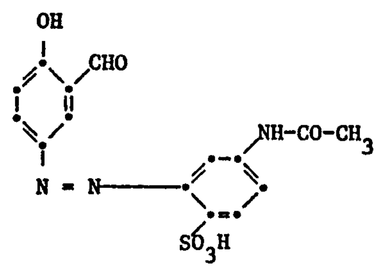 | Cr | gelb |
| 27 | do | do | Co | mittelbraun |

| No. | I | II | III | IV |
|---|---|---|---|---|
| 28 | 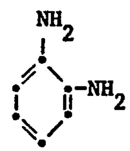 | 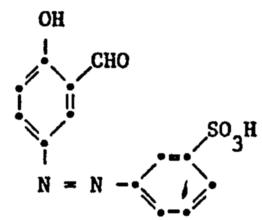 | Fe | braun |
| 29 | do | 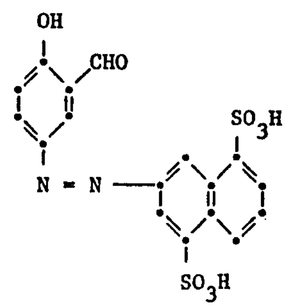 | Cr | gelbbraun |
| 30 | do | do | Co | braun |

| No. | I | II | III | IV |
|---|---|---|---|---|
| 31 | 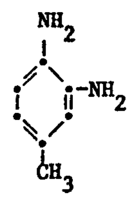 | 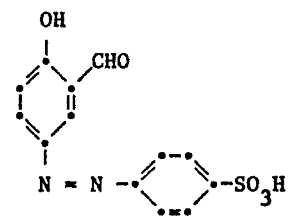 | Co | mittelbraun |
| 32 | do | do | Cr | gelb |
| 33 | do | 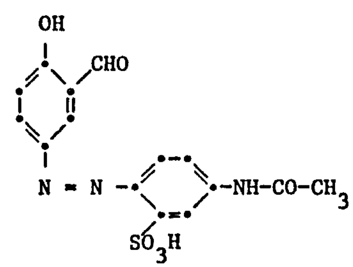 | Cr | gelb |
| 34 | do | do | Co | mittelbraun |

| No. | I | II | III | IV |
|---|---|---|---|---|
| 35 | 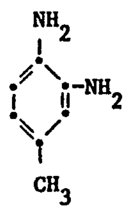 | 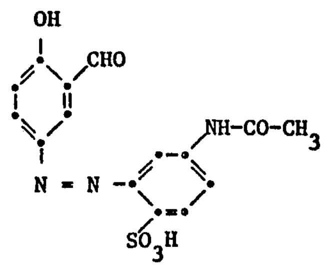 | Cr | gelb |
| 36 | do | 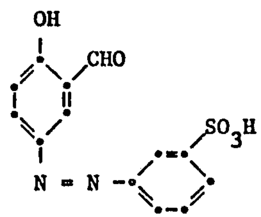 | Fe | braun |
| 37 | do | 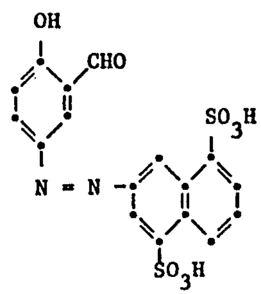 | Cr | gelbbraun |

| No. | I | II | III | IV |
|---|---|---|---|---|
| 38 | 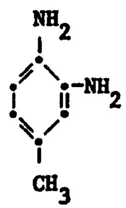 | 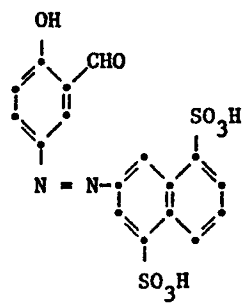 | Co | braun |
| 39 | do | 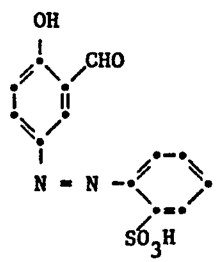 | Co | mittelbraun |
| 40 | do | do | Cr | gelb |

| No. | I | II | III | IV |
|---|---|---|---|---|
| 41 | 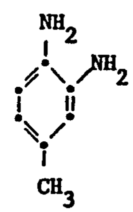 | 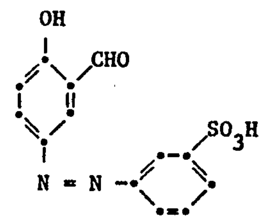 | Cr | gelb |
| 42 | do | do | Co | mittelbraun |
| 43 | do | 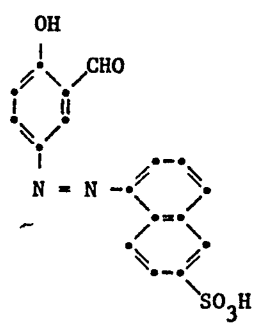 | Cr | mittelbraun |
| 44 | do | do | Co | braun |

| No. | I | II | III | IV |
|---|---|---|---|---|
| 45 | 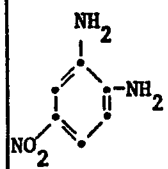 | 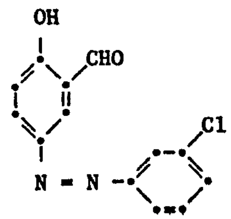 | Co | braun |
| 46 | 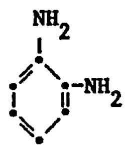 | 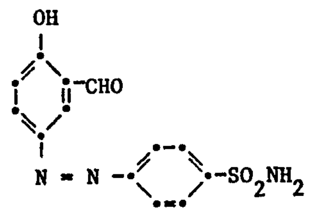 | Co | braun |
| 47 | 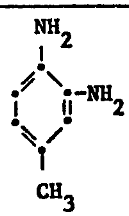 | 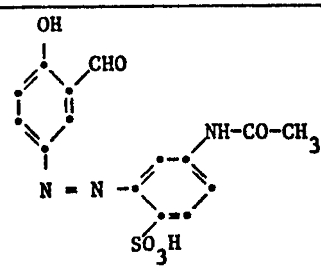 | Co | mittelbraun |

Beispiel 4

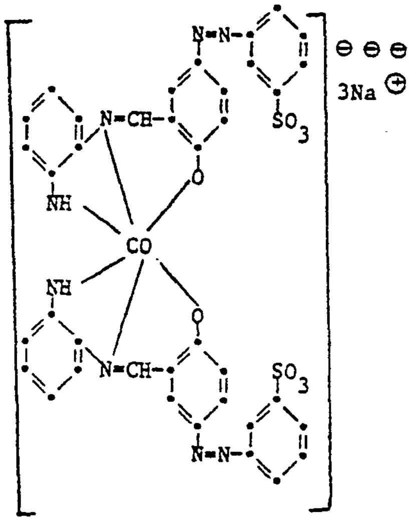

+

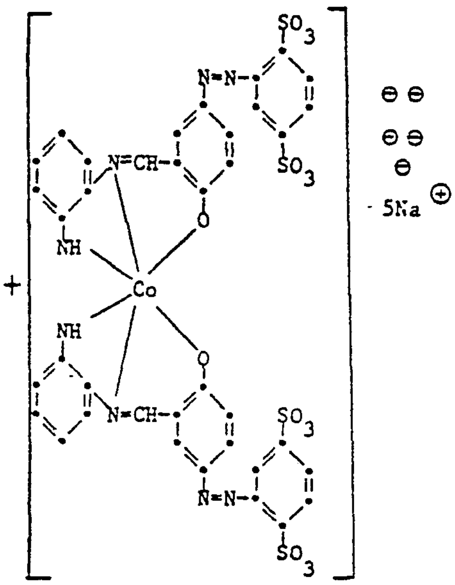

+

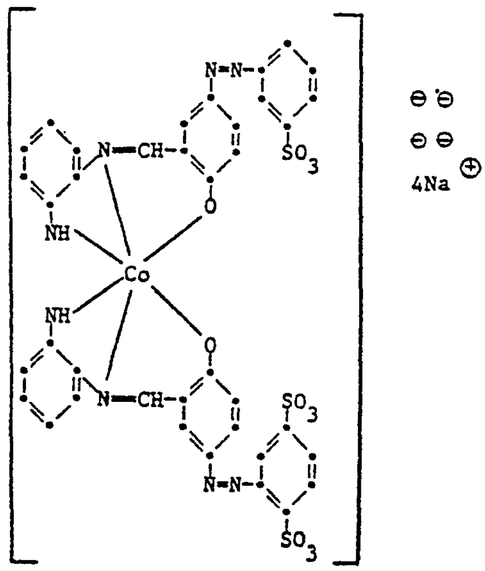

10.8 Teile 1,2-Diaminobenzol, 15.3 Teile des Monoazofarbstoffs aus diazotierter 1-Aminobenzol-2-sulfonsäure und Salicylaldehyd und 19.3 Teile des Monoazofarbstoffs aus diazotierter 1-Aminobenzol-2, 5-disulfonsäure, und Salicylaldehyd werden in 250 Volumenteile Wasser eingetragen und mit 16.9 Teilen Kobaltsulfaheptahydrat (entsprechend 3.54 Teile Kobalt) versetzt. Man erhitzt das Reaktionsgemisch auf 80 °C und hält es mit 2 N Natronlauge auf pH 8 bis 8,5. Nach Beendigung der Metallisierung wird das erhaltene Farbstoffgemisch durch Zugabe von Natriumchlorid ausgefällt, abfiltriert und getrocknet. Das erhaltene dunkle Pulver färbt Leder in einem mittelbraunen Ton mit guten Echtheiten.

Ersetzt man im obigen Beispiel die 10.8 Teile 1,2-Diaminobenzol durch 12.2 Teile 3,4-Diaminotoluol, so erhält man einen Farbstoff mit ähnlichen Eigenschaften.

Färbevorschrift für Leder

100 Teile Bekleidungsvelourleder werden bei 50° in einer Lösung von 1 000 Teilen Wasser und 2 Teilen 24 %igem Ammoniak während 2 Stunden aufgewalkt und anschliessend bei 60° in einer Lösung von 1 000 Teilen Wasser, 2 Teilen 24 %igem Ammoniak und 3 Teilen Farbstoff des Beispiels 2 während 1 Stunde gefärbt. Hierauf gibt man eine Lösung von 40 Teilen Wasser und 4 Teilen 85 %iger Ameinsensäure zu und färbt noch weitere 30 Minuten. Dann werden die Leder gut gespült und gegebenenfalls noch mit 2 Teilen eines Dicyandiaminoformaldehydkondensationsproduktes während 30 Minuten bei 50° behandelt. Man erhält eine mittelbraune Färbung mit guten Echtheiten.

Färbevorschrift für Wolle

100 Teile Wollstrickgarn werden bei 50° in ein Färbebad eingeführt, das auf 4 000 Teile Wasser

2 Teile des Farbstoffs des Beispiels 2, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält eine braungefärbte Wolle mit guten Echtheitseigenschaften.

Aufsprühvorschrift für Leder

3 Teile Farbstoff des Tabellenbeispiels 26 werden in einer Lösungsmittelmischung, bestehend aus 80 Teilen Dimethylformamid und 17 Teilen Diäthylenglykol gelöst. Diese Farblösung wird nun mit einer Spritzpistole auf Leder aufgesprüht und das Leder anschliessend getrocknet. Man erhält eine braune Färbung mit guten Echtheiten.

**Ansprüche**

1. 1 : 2-Metallkomplexfarbstoffe, die an ein Schwermetallatom 2 gleiche oder verschiedene Azomethine der Formel

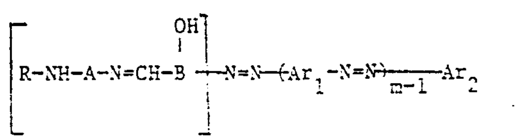

(1)

gebunden enthalten, worin R Wasserstoff, gegebenenfalls substituiertes Alkyl, Aralkyl, Aryl, Alkylsulfonyl oder Arylsulfonyl, A der Rest eines aromatischen oder heterocyclischen Diamins, dessen Aminogruppen in 1,2-Stellung zueinander stehen, B der Rest eines aromatischen o-Hydroxyaldehyds, $Ar_1$ ein aromatischer Rest, m 1 oder 2 und $Ar_2$ ein aromatisch-carbocyclischer oder heterocyclischer Rest ist.

2. 1 : 2-Metallkomplexe gemäss Anspruch 1, worin 2 Moleküle der Formel (1) an ein Chrom- oder Kobaltatom gebunden sind und worin R dasselbe wie in Anspruch 1, A einen gegebenenfalls substituierten Arylenrest und B den Rest eines o-Hydroxybenzaldehyds bedeutet.

3. 1 : 2-Chrom- oder Kobaltkomplexe gemäss den Ansprüchen 1 und 2, enthaltend 2 Azomethinverbindungen der Formel

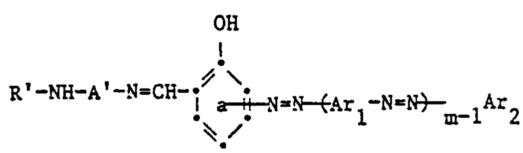

(2)

worin R' Wasserstoff, niedrigmolekulares, gegebenenfalls substituiertes Alkyl oder gegebenenfalls substituiertes Phenyl, A' gegebenenfalls substituiertes Phenylen, $Ar_1$ ein gegebenenfalls substituierter Phenylen- oder Naphthylenrest, m 1 oder 2 und $Ar_2$ ein Benzol- oder Naphthalinrest oder ein heterocyclischer Rest ist, wobei die Aryl- azo- oder Arylazoarylenazogruppe in o- oder p-Stellung zur Hydroxygruppe gebunden ist.

4. 1 : 2-Chrom- oder Kobaltkomplexe gemäss den Ansprüchen 1 bis 3, enthaltend Azomethinverbindungen der Formel

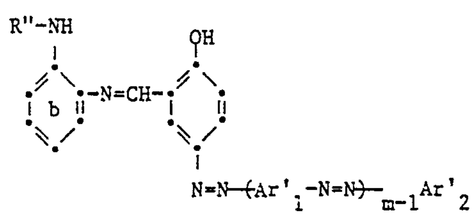

(3)

worin R" Wasserstoff oder gegebenenfalls mit Chlor, Sulfo, Methylsulfonyl oder Nitro substituiertes Phenyl ist. $Ar_1'$ einen gegebenenfalls mit Sulfo, Alkyl oder Alkoxy substituierten Phenylen- oder einen gegebenenfalls mit Sulfo substituierten Naphthylenrest, und $Ar_2'$ einen gegebenenfalls mit Chlor, Brom, Nitro, Acylamino, Sulfo, Sulfamoyl, N-mono- oder N,N-dialkyliertem Sulfamoyl, Alkylsulfonyl, Alkyl oder Alkoxy substituierten Phenyl- oder einen gegenbenenfalls mit Sulfo substituierten Naphthylrest bedeutet und worin der Benzolring b unsubstituiert ist oder einen der folgenden Substituenten trägt : Sulfo, Sulfamoyl, N-mono- oder N,N-dialkyliertes Sulfamoyl, Alkylsulfonyl, Chlor, Brom, Nitro, Alkyl und Alkoxy

sowie Carboxy und m 1 oder 2 ist und worin die Symbole R″, $Ar_1'$, $Ar_2'$ oder der Ring b zusammen mindestens eine wasserlöslichmachende Gruppe enthalten.

5. Chrom- oder Kobaltkomplexe gemäss den Ansprüchen 1 bis 4, enthaltend 2 Azomethinverbindungen der Formel

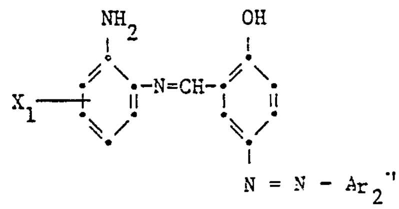

(4)

worin $X_1$ Wasserstoff, Sulfo, niedrigmolekulares Alkyl, Chlor oder Nitro und $Ar_2''$ ein Phenylrest, der eine oder zwei Sulfogruppen trägt und gegebenenfalls noch mit niedrigmolekularem Alkyl oder Alkoxy, Nitro, Acylamino oder Chlor substituiert ist, oder ein gegebenenfalls mit 1 oder 2 Sulfogruppen substituierter Naphthylrest ist.

6. Chrom- oder Kobaltkomplexe gemäss Anspruch 5, enthaltend 2 Azomethinverbindungen der Formel (4), worin $X_1$ Wasserstoff oder die Methylgruppe bedeutet.

7. Chrom- oder Kobaltkomplexe gemäss den Ansprüchen 1 bis 6, enthaltend 2 gleiche Azomethinverbindungen.

8. Gemische von Chrom- oder Kobaltkomplexen gemäss den Ansprüchen 1 bis 6, enthaltend 2 gleiche oder 2 verschiedene Azomethinverbindungen.

9. Verfahren zur Herstellung von 1 : 2-Metallkomplexfarbstoffen gemäss Anspruch 1 nach an sich bekannten Methoden, dadurch gekennzeichnet, dass man ein Azomethin der Formel (1) oder ein Gemisch aus einem Amin der Formel

$$R—NH—A—NH_2 \qquad (4)$$

und einem Aldehyd der Formel

$$OHC—B—OH \qquad (5)$$

wobei entweder das Amin der Formel (4) oder der Aldehyd der Formel (5) die Gruppe $—N = N—(Ar_1—N = N)_{m-1}Ar_2$ enthält, mit einem metallabgebenden Mittel im Verhältnis 2 : 1 umsetzt.

10. Verfahren gemäss Anspruch 9, dadurch gekennzeichnet, dass man die Verbindungen der Formel (1), bzw. die Gemische der Verbindungen (4) und (5), worin A einen gegebenenfalls substituierten Arylenrest und B den Rest eines o-Hydroxybenzaldehyds bedeutet, mit chrom- oder kobaltabgebenden Mitteln umsetzt.

11. Verfahren gemäss den Ansprüchen 9 und 10, dadurch gekennzeichnet, dass man 2 Aequivalente einer Azomethinverbindung der Formel

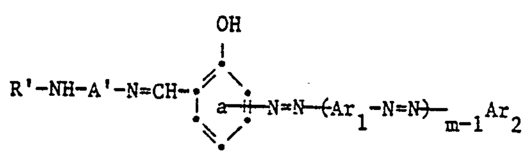

(2)

worin R′ Wasserstoff, niedrigmolekulares, gegebenenfalls substituiertes Alkyl oder gegebenenfalls substituiertes Phenyl, A′ gegebenenfalls substituiertes Phenylen, $Ar_1$ ein gegebenenfalls substituierter Phenylen- oder Naphthylenrest, m 1 oder 2 und $Ar_2$ ein Benzol- oder Naphtalinrest oder ein heterocyclischer Rest ist, wobei die Arylazo- oder Arylazoarylenazogruppe in o- oder p-Stellung zur Hydroxygruppe gebunden ist, bzw. das Gemisch aus 2 Aequivalenten des dieser Azomethinverbindung entsprechenden Amins und Aldehyds mit 1 Aequivalent einer chrom- oder kobaltabgebenden Verbindung umsetzt.

12. Verfahren gemäss den Ansprüchen 9 bis 11, dadurch gekennzeichnet, dass man von einer Azomethinverbindung

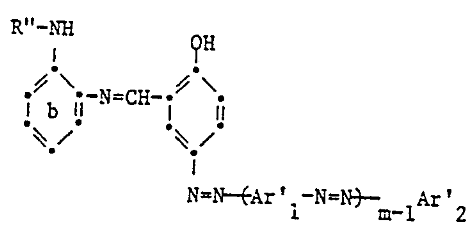

(3)

bzw. einem Gemisch des dieser Azomethinverbindung entsprechenden Amins und Aldehyds ausgeht, worin R″ Wasserstoff oder gegebenenfalls mit Chlor, Sulfo, Methylsulfonyl oder Nitro substituiertes Phenyl ist, $Ar_1'$ einen gegebenenfalls mit Sulfo, Alkyl oder Alkoxy substituierten Phenylen- oder einen gegebenenfalls mit Sulfo substituierten Naphthylenrest, m 1 oder 2 und $Ar_2'$ einen gegebenenfalls mit Chlor, Brom, Nitro, Acylamino, Sulfo, Sulfamoyl, N-mono- oder N,N-dialkyliertem Sulfamoyl, Alkylsulfonyl, Alkyl oder Alkoxy substituierten Phenyl- oder einen gegebenenfalls mit Sulfo substituierten Naphthylrest bedeutet und worin der Benzolring b unsubstituiert ist oder einen der folgenden Substituenten trägt: Sulfo, Sulfamoyl, N-mono- oder N,N-dialkyliertes Sulfamoyl, Alkylsulfonyl, Chlor, Brom, Nitro, Alkyl und Alkoxy sowie Carboxy und worin die Symbole R″, $Ar_1'$, $Ar_2'$ oder der Ring b zusammen mindestens eine wasserlöslichmachende Gruppe enthalten.

13. Verfahren gemäss den Ansprüchen 9 bis 12, dadurch gekennzeichnet, dass man von einer Azomethinverbindung der Formel

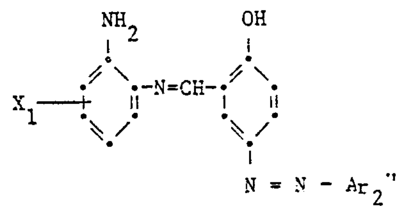

(4)

bzw. einem Gemisch des dieser Azomethinverbindung entsprechenden Amins und Aldehyds ausgeht, worin $X_1$ Wasserstoff, Sulfo, niedrigmolekulares Alkyl, Chlor oder nitro und $Ar_2''$ ein Phenylrest, der eine oder zwei Sulfogruppen trägt und gegebenenfalls noch mit niedrigmolekularem Alkyl oder Alkoxy, Nitro, Acylamino oder Chlor substituiert ist, oder ein gegebenenfalls mit 1 oder 2 Sulfogruppen substituierter Naphthylrest ist.

14. Verfahren gemäss Anspruch 13, dadurch gekennzeichnet, dass man von Azomethinverbindungen der Formel (4) bzw. einem Gemisch des dieser Azomethinverbindung entsprechenden Amins und Aldehyds ausgeht, worin $X_1$ Wasserstoff oder die Methylgruppe bedeutet.

15. Verfahren gemäss den Ansprüchen 9 bis 14, dadurch gekennzeichnet, dass man 2 Aequivalente der gleichen Azomethinverbindung mit einem Aequivalent eines Chrom oder Kobalt abgebenden Mittels umsetzt.

16. Verfahren gemäss den Ansprüchen 9 bis 14, dadurch gekennzeichnet, dass man je 1 Aequivalent von zwei verschiedenen Azomethinverbindungen mit einem Aequivalent eines Chrom oder Kobalt abgebenden Mittels umsetzt.

17. Verfahren zum Färben und Bedrucken von Polyamidmaterialien unter Verwendung der gemäss den Ansprüchen 1 bis 8 definierten Farbstoffe.

18. Verfahren gemäss Anspruch 17 zum Färben und Bedrucken von Leder oder Pelz.

19. Das gemäss den Ansprüchen 17 und 18 erhaltene, gefärbte oder bedruckte Material.

**Claims**

1. A 1 : 2 metal complex dye which contains, bonded to a heavy metal atom, two identical or different azomethines of the formula

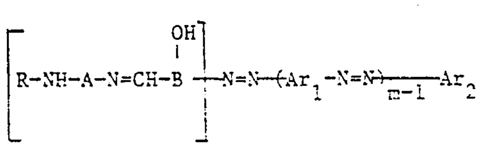

(1)

wherein R is hydrogen, unsubstituted or substituted alkyl, aralkyl, aryl, alkylsulfonyl or arylsulfonyl, A is the radical of an aromatic heterocyclic diamine, the amino groups of which are in the 1,2-position with respect to each other, B is the radical of an aromatic o-hydroxyaldehyde, $Ar_1$ is an aromatic radical, m is 1 or 2, and $Ar_2$ is an aromatic-carbocyclic or heterocyclic radical.

2. A 1 : 2 metal complex according to claim 1, wherein two molecules of the formula (1) are bonded to a chromium or cobalt atom, and wherein R is as defined in claim 1, A is an unsubstituted or substituted arylene radical, and B is the radical of a o-hydroxybenzaldehyde.

3. A 1 : 2 chromium or cobalt complex according to claims 1 and 2 which contains two azomethine compounds of the formula

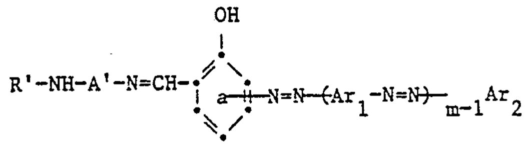

(2)

wherein R' is hydrogen, low molecular unsubstituted or substituted alkyl or unsubstituted or substituted phenyl, A' is unsubstituted or substituted phenylene, $Ar_1$ is an unsubstituted or substituted phenylene or naphthylene radical, m is 1 or 2 and $Ar_2$ is a benzene or naphthalene radical or a heterocyclic radical, whilst the arylazo or arylazoarylene-azo group is bonded in the ortho- or para-position to the hydroxyl group.

4. A 1 : 2 chromium or cobalt complex according to claims 1 to 3 which contains azomethine compounds of the formula

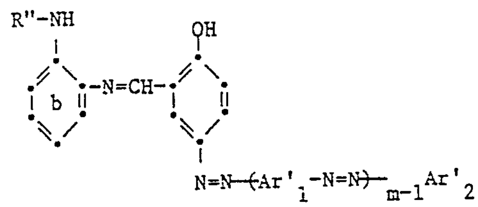

(3)

wherein R'' is hydrogen or phenyl which is unsubstituted or substituted by chlorine, sulfo, methylsulfonyl or nitro, $Ar_1'$ is a phenylene radical which is unsubstituted or substituted by sulfo, alkyl or alkoxy, or a naphtylene radical which is unsubstituted or substituted by sulfo, and $Ar_2'$ is a phenyl radical which is unsubstituted or substituted by chlorine, bromine, nitro, acylamino, sulfo, sulfamoyl, N-mono- or N,N-dialkylated sulfamoyl, alkyl-sulfonyl, alkyl or alkoxy, or a naphthyl radical which is unsubstituted or substituted by sulfo, and wherein the benzene ring b is unsubstituted or carries one of the following substituents: sulfo, sulfamoyl, N-mono- or N,N-dialkylated sulfamoyl, alkylsulfonyl, chlorine, bromine, nitro, alkyl and alkoxy as well as carboxyl ; and m is 1 or 2, and wherein the symbols R'', $Ar_1'$, $Ar_2'$ or the ring b together contain at least one water-solubilising group.

5. A chromium or cobalt complex according to claims 1 to 4 which contains 2 azomethine compounds of the formula

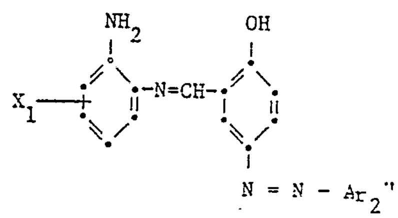

(4)

wherein $X_1$ is hydrogen, sulfo, low molecular alkyl, chlorine or nitro, and $Ar_2''$ is a phenyl radical with carries one or two sulfo groups and can be additionally substituted by low molecular alkyl or alkoxy, nitro, acylamino or chlorine, or is a naphthyl radical which is unsubstituted or substituted by 1 or 2 sulfo groups.

6. A chromium or cobalt complex according to claim 5 which contains two azomethine compounds of the formula (4), wherein $X_1$ is hydrogen or the methyl group.

7. A chromium or cobalt complex according to claims 1 to 6 which contains two identical azomethine compounds.

8. A mixture of chromium or cobalt complexes according to claims 1 to 6 which contains two identical or two different azomethine compounds.

9. A process for the manufacture of a 1 : 2 metal complex dye according to claim 1 by methods which are known per se, which process comprises reacting an azomethine of the formula (1) or a mixture of an amine of the formula

$$R—NH—A—NH_2 \qquad (4)$$

and an aldehyde of the formula

$$OHC—B—OH \qquad (5)$$

either of which contains the $—N = N—(Ar_1—N = N)_{m-1}Ar_2$ group, with a metal donor, in the ratio 2 : 1.

10. A process according to claim 9, which comprises reacting the compound of the formula (1), or the mixture of compounds (4) and (5), wherein A is an unsubstituted or substituted arylene radical and B

is the radical of an o-hydroxybenzaldehyde, with a chromium or cobalt donor.

11. A process according to claims 9 and 10, which comprises reacting two equivalents of an azomethine compound of the formula

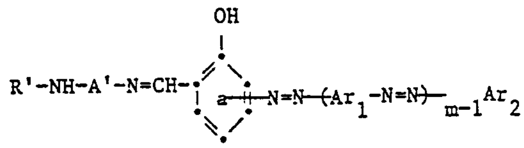

(2)

wherein R' is hydrogen, low molecular unsubstituted or substituted alkyl or unsubstituted or substituted phenyl, A' is unsubstituted or substituted phenylene, $Ar_1$ is an unsubstituted or substituted phenylene or naphthylene radical, m is 1 or 2 and $Ar_2$ is a benzene or naphthalene radical or a heterocyclic radical, whilst the arylazo or arylazoarylene-azo group is bonded in the ortho- or para-position to the hydroxyl group, or a mixture of two equivalents of the amine and aldehyde corresponding to said azomethine compound, with one equivalent of a chromium or cobalt donor.

12. A process according to claims 9 to 11, wherein the starting material is an azomethine compound of the formula

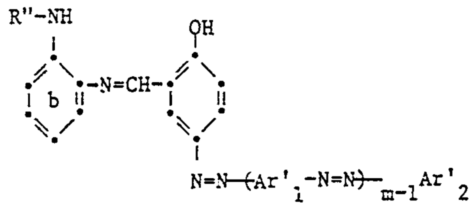

(3)

or a mixture of the amine and aldehyde corresponding to said azomethine compound, wherein R'' is hydrogen or phenyl which is unsubstituted or substituted by chlorine, sulfo, methylsulfonyl or nitro, $Ar_1'$ is a phenylene radical which is unsubstituted or substituted by sulfo, alkyl or alkoxy, or a naphthylene radical which is unsubstituted or substituted by sulfo, m is 1 or 2, and $Ar_2'$ is a phenyl radical which is unsubstituted or substituted by chlorine, bromine, nitro, acylamino, sulfo, sulfamoyl, N-mono- or N,N-dialkylated sulfamoyl, alkyl-sulfonyl, alkyl or alkoxy, or a naphthyl radical which is unsubstituted or substituted by sulfo, and wherein the benzene ring b is unsubstituted or carries one of the following substituents : sulfo, sulfamoyl, N-mono- or N,N-dialkylated sulfamoyl, alkylsulfonyl, chlorine, bromine, nitro, alkyl and alkoxy as well as carboxyl, and wherein the symbols R'', $Ar_1'$, $Ar_2'$ or the ring b together contain at least one water-solubilising group.

13. A process according to claims 9 to 12, wherein the starting material is an azomethine compound of the formula

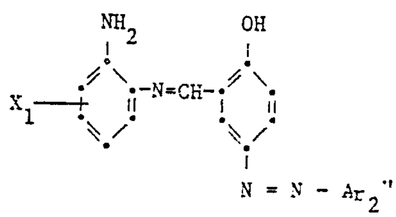

(4)

or a mixture of the amine and aldehyde corresponding to said azomethine compound, wherein $X_1$ is hydrogen, sulfo, low molecular alkyl, chlorine or nitro, and $Ar_2''$ is a phenyl radical which carries one or two sulfo groups and can be additionally substituted by low molecular alkyl or alkoxy, nitro, acylamino or chlorine, or is a naphthyl radical which is unsubstituted or substituted by 1 or 2 sulfo groups.

14. A process according to claim 13, wherein the starting material is an azomethine compound of the formula (4), or a mixture of the amine and aldehyde corresponding to said azomethine compound, wherein $X_1$ is hydrogen or the methyl group.

15. A process according to claim 9 to 14, which comprises reacting two equivalents of the same azomethine compound with one equivalent of a chromium or cobalt donor.

16. A process according to claims 9 to 14, which comprises reacting 1 equivalent of each of two different azomethine compounds with one equivalent of a chromium or cobalt donor.

17. A process for dyeing and printing polyamide materials which comprises the use of a dye as defined in any one of claims 1 to 8.

18. A process according to claim 17 for dyeing and printing leather or fur.

19. The dyed or printed material obtained according to claims 17 and 18.

**Revendications**

1. Colorants à complexe métallifère du type 1 : 2 qui contiennent fixées sur un atome de métal lourd deux azométhines identiques ou différentes ayant la formule

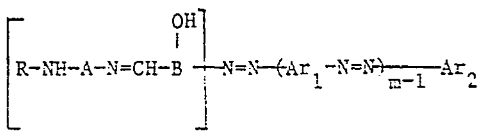
(1)

dans laquelle R est de l'hydrogène, un reste alkyle éventuellement substitué, aralkyle, aryle, alkylsulfonyle ou arylsulfonyle ; A est le reste d'une diamine aromatique ou hétérocyclique dont les groupes amino sont en position 1,2 l'un par rapport à l'autre ; B est le reste d'un o-hydroxyaldéhyde aromatique ; $Ar_1$ est un reste aromatique ; m vaut 1 ou 2, et $Ar_2$ est un reste carbocyclique aromatique ou hétérocyclique.

2. Complexes métallifères du type 1 : 2 selon la revendication 1, dans lesquels deux molécules de formule (1) sont fixées sur un atome de chrome ou un atome de cobalt, et dans lesquels R a la même signification que dans la revendication 1 ; A est un reste arylène éventuellement substitué, et B est le reste d'un o-hydroxybenzaldéhyde.

3. Complexes chromifères ou complexes cobaltifères du type 1 : 2 selon les revendications 1 et 2 contenant deux composés azométhiniques de formule

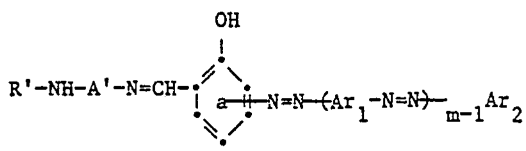
(2)

dans laquelle R' est de l'hydrogène, un reste alkyle à bas poids moléculaire, éventuellement substitué, ou un reste phényle éventuellement substitué ; A' est un groupe phénylène éventuellement substitué ; $Ar_1$ est un reste phénylène ou naphtylène éventuellement substitué ; m est 1 ou 2 et $Ar_2$ est un reste benzénique ou naphtalénique ou bien un reste hétérocyclique, le groupe arylazoïque ou arylazoarylène-azoïque étant fixé en position o- ou p- par rapport au groupe hydroxyle.

4. Complexes chromifères ou complexes cobaltifères du type 1 : 2 selon les revendications 1 à 3, contenant les composés azométhiniques de formule

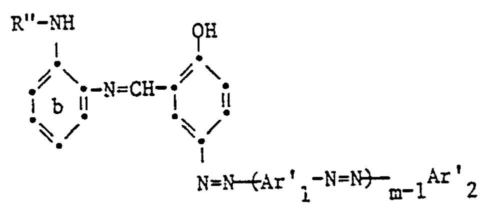
(3)

dans laquelle R" est de l'hydrogène ou un groupe phényle éventuellement substitué par du chlore, les radicaux sulfo, méthylsulfonyle ou nitro ; $Ar_1'$ est un reste phénylène éventuellement substitué par les radicaux sulfo, alkyle ou alcoxy ou bien un reste naphtylène éventuellement substitué par un radical sulfo, et $Ar_2'$ est un groupe phényle éventuellement substitué par du chlore, du brome, les radicaux nitro, acylamino, sulfo, sulfamoyle, sulfamoyle N-mono-alkylé ou N,N-dialkylé, alkylsulfonyle, alkyle ou alcoxy, ou bien un reste naphtyle éventuellement substitué par le radical sulfo, et où le noyau benzénique b n'est pas substitué ou porte un des substituants suivants : sulfo, sulfamoyle, sulfamoyle N-mono-alkylé ou N,N-dialkylé, alkylsulfonyle, chloro, bromo, nitro, alkyle et alcoxy ainsi que carboxy, et m est 1 ou 2, et où les symboles R", $Ar_1'$, $Ar_2'$, ou le noyau b contiennent ensemble au moins un groupe aquasolubilisant.

5. Complexes chromifères ou complexes cobaltifères selon les revendications 1 à 4, contenant deux composés azométhiniques de formule

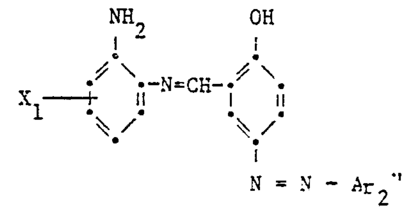

(4)

dans laquelle $X_1$ est de l'hydrogène, un groupe sulfo, alkyle à bas poids moléculaire, chloro ou nitro, et $Ar_2''$ est un reste phényle qui porte un ou deux groupes sulfo, et qui est substitué éventuellement encore par des radicaux alkyle ou alcoxy à bas poids moléculaire, nitro, acylamino ou chloro, ou bien un reste naphtyle éventuellement substitué par un ou deux groupes sulfo.

6. Complexes chromifères ou complexes cobaltifères selon la revendication 5, contenant deux composés azométhiniques de formule (4), dans laquelle $X_1$ est de l'hydrogène ou le groupe méthyle.

7. Complexes chromifères ou complexes cobaltifères selon les revendications 1 à 6, contenant deux composés azométhiniques identiques.

8. Mélanges de complexes chromifères ou de complexes cobaltifères selon les revendications 1 à 6, contenant deux composés azométhiniques identiques ou deux composés azométhiniques différents.

9. Procédé pour la préparation de colorants à complexes métallifères du type 1 : 2 selon la revendication 1, selon des procédés connus, caractérisé par le fait qu'on fait réagir, dans un rapport 2 : 1, une azométhine de formule (1) ou un mélange d'une amine de formule

$$R—NH—A—NH_2 \qquad (4)$$

et d'un aldéhyde de formule

$$OHC—B—OH \qquad (5)$$

soit l'amine de formule (4), soit l'aldéhyde de formule (5) contenant le groupe $—N=N—(Ar_1—N=N)_{m-1}Ar_2$, avec un agent cédant un métal.

10. Procédé selon la revendication 9, caractérisé par le fait qu'on fait réagir les composés de formule (1) ou les mélanges de composés (4) et (5) où A est un reste arylène éventuellement substitué, et B est le reste d'un o-hydroxybenzaldéhyde, avec des agents cédant du chrome ou cédant du cobalt.

1. Procédé selon les revendications 9 et 10, caractérisé par le fait qu'on fait réagir deux équivalents d'un composé azométhinique de formule

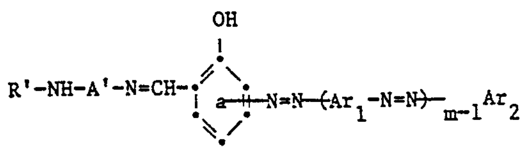

(2)

dans laquelle R' est de l'hydrogène, un groupe alkyle à bas poids moléculaire, éventuellement substitué, ou un groupe phényle éventuellement substitué ; A' est un groupe phénylène éventuellement substitué ; $Ar_1$ est un reste phénylène ou naphtylène éventuellement substitué ; m est 1 ou 2, et $Ar_2$ est un reste benzénique ou naphtalénique ou bien un reste hétérocyclique, les groupes arylazoïque ou arylazo-arylène-azoïque étant liés en position o- ou p- par rapport au groupe hydroxyle, ou bien le mélange de deux équivalents de l'amine et de l'aldéhyde correspondant à ce composé azométhinique, avec un équivalent d'un composé cédant du chrome ou cédant du cobalt.

12. Procédé selon les revendications 9 à 11, caractérisé par le fait qu'on part d'un composé azométhinique de formule

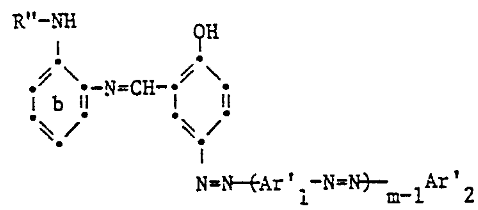

(3)

ou d'un mélange de l'amine et de l'adéhyde correspondant à ce composé azométhinique, où R" est de l'hydrogène ou un reste phényle éventuellement substitué par les radicaux chloro, sulfo, méthylsulfonyle

ou nitro ; $Ar_1'$ est un reste phénylène éventuellement substitué par les radicaux sulfo, alkyle ou alcoxy, ou bien un reste naphtylène éventuellement substitué par le radical sulfo ; m est 1 ou 2, et $Ar_2'$ est un reste phényle éventuellement substitué par les radicaux chloro, bromo, nitro, acylamino, sulfo, sulfamoyle, sulfamoyle N-mono-alkylé ou N,N-dialkylé, alkylsulfonyle, alkyle ou alcoxy ou bien un reste naphtyle éventuellement substitué par le radical sulfo, et où le noyau benzénique b n'est pas substitué ou bien porte un des substituants suivants : sulfo, sulfamoyle, sulfamoyle N-mono-alkylé ou N,N-dialkylé, alkylsulfonyle, chloro, bromo, nitro, alkyle et alcoxy, ainsi que carboxy, et où les symboles R'', $Ar_1'$, $Ar_2'$ ou le noyau b contiennent ensemble au moins un groupe aquasolubilisant.

13. Procédé selon les revendications 9 à 12, caractérisé par le fait qu'on part d'un composé azométhinique de formule

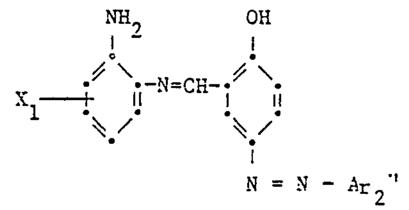

(4)

ou bien d'un mélange de l'amine et de l'aldéhyde correspondant à ce composé azométhinique, où $X_1$ est de l'hydrogène, un groupe sulfo, alkyle à bas poids moléculaire, chloro ou nitro, et $Ar_2''$ est un reste phényle qui porte un ou deux groupes sulfo et qui est éventuellement encore substitué par les radicaux alkyle ou alcoxy à bas poids moléculaire, nitro, acylamino ou chloro, ou bien un reste naphtyle éventuellement substitué par un ou deux groupes sulfo.

14. Procédé selon la revendication 13, caractérisé par le fait qu'on part de composés azométhiniques de formule (4) ou d'un mélange de l'amine et de l'aldéhyde correspondant à ce composé azométhinique, où $X_1$ est de l'hydrogène ou le groupe méthyle.

15. Procédé selon les revendications 9 et 14, caractérisé par le fait qu'on fait réagir deux équivalents du même composé azométhinique avec un équivalent d'un agent cédant du chrome ou du cobalt.

16. Procédé selon les revendications 9 et 14, caractérisé par le fait qu'on fait réagir pour un équivalent de chacun des deux composés azométhiniques différents, un équivalent d'un agent cédant du chrome ou du cobalt.

17. Procédé pour teindre et imprimer des matières en polyamides en utilisant les colorants définis dans les revendications 1 à 8.

18. Procédé selon la revendication 17, pour teindre et imprimer du cuir ou des peaux.

19. Les matières teintes ou imprimées obtenues selon les revendications 17 et 18.